# EUROPÄISCHE PATENTSCHRIFT

(11) **EP 3 114 011 B1**
(45) Veröffentlichungstag und Bekanntmachung des Hinweises auf die Patenterteilung: **11.04.2018**
(21) Anmeldenummer: 15706438.7
(22) Anmeldetag: 19.02.2015
(51) Int. Cl.: B62D 21/11, B62D 25/08

(54) **VERSTEIFUNGSSTRUKTUR EINES FAHRZEUGS IN FORM EINES SCHUBFELDS**
STIFFENING STRUCTURE OF A VEHICLE IN THE FORM OF A SHEAR FIELD
STRUCTURE DE RENFORT D'UN VÉHICULE SE PRÉSENTANT SOUS LA FORME D'UN BLOC DE POUSSÉE

(30) Priorität: 05.03.2014 DE 102014204052
(43) Veröffentlichungstag der Anmeldung: 11.01.2017
(73) Patentinhaber: Bayerische Motoren Werke Aktiengesellschaft, 80809 München (DE)
(72) Erfinder: LÖFFLER, Robert, 85368 Moosburg (DE); PIENKOHS, Andreas, 15345 Lichtenow (DE)
(86) Internationale Anmeldenummer: PCT/EP2015/053550
(87) Internationale Veröffentlichungsnummer: WO 2015/132078

(56) Entgegenhaltungen:
- EP-A2- 1 228 949
- DE-A1-102005 061 417
- DE-A1-102009 058 400

## Beschreibung

Die Erfindung betrifft eine Versteifungsstruktur eines zweispurigen Fahrzeugs in Form eines als Blechformstück ausgebildeten Schubfelds, welches an einem als Achsträger fungierenden Hilfsrahmen und weiterhin an seitlichen Schwellern des Fahrzeug-Aufbaus abgestützt ist. Bei den Schwellern, welche auch als Tür-Schweller bezeichnet werden, handelt es sich bekanntlich um Elemente einer selbsttragenden Fzg.-Karosserie, d.h. des Fahrzeug-Aufbaus, die sich seitlich, d.h. in Fzg.-Querrichtung betrachtet außerhalb von üblichen Längsträgern beidseitig in Fzg.-Längsrichtung erstrecken. Zum Stand der Technik wird neben der EP 0 941 912 B1 auf die gattungsgemäße DE 10 2012 010 552 A1 verwiesen.

Flächige Versteifungselemente im Bereich von Fahrzeug-Hilfsrahmen sind in unterschiedlichsten Ausführungsformen bekannt und werden aufgrund immer weiter gehender Leichtbau-Strukturmaßnahmen in jüngerer Zeit als sog. Schubfelder in zunehmendem Maße eingesetzt. Die eingangs erstgenannte Schrift zeigt eine relativ frühe Ausführungsform, während die zweitgenannte Schrift eine mögliche Weiterbildung zeigt, bei welcher das Schubfeld über dort sog. Diagonalstreben zusätzlich an den seitlichen Schwellern des Fahrzeug-Aufbaus, bei welchem Fahrzeug es sich analog der vorliegenden Erfindung vorrangig um einen Personenkraftwagen handelt, abgestützt ist.

Hiermit soll nun ein weiter verbessertes Schubfeld nach dem Oberbegriff des Anspruchs 1 aufgezeigt werden (= Aufgabe der vorliegenden Erfindung).

Die Lösung dieser Aufgabe ist dadurch gekennzeichnet, das Schubfeld über im Blechformstück ausgeformte Stützarme an den Schwellern abgestützt ist. Vorteilhafte Aus- und Weiterbildungen sind Inhalt der Unteransprüche. Erfindungsgemäß sind sog. Stützarme, über welche der im wesentlichen zwischen sich im wesentlichen in Fzg.-Längsrichtung und Fzg.-Querrichtung erstreckenden Trägern des besagten Hilfsrahmens liegende Bereich oder Abschnitt des Schubfelds weiterhin an den seitlichen Schwellern des Fzg.-Aufbaus abgestützt ist, ihrerseits Bestandteil des das Schubfeld bildenden Blechformstücks. Der Montage- und Fertigungsaufwand lässt sich hierdurch verringern, insbesondere indem das Schubfeld als Blechformteil, welches durch Stanzen und spanloses Umformen als in sich zusammenhängendes einziges Formteil hergestellt ist, ausgebildet ist.

Im Sinne vorteilhafter Weiterbildungen kann zumindest ein Zusatzblech zur Versteifung des Schubfeldes derart vorgesehen sein, dass in Richtung der Fahrzeug-Hochachse betrachtet abschnittsweise oder bereichsweise quais ein durch eine Oberschale sowie eine Unterschale gebildetes Schalenprofil vorliegt. Eine solche zusätzliche Versteifung wird insbesondere für die besagten Stützarme empfohlen, kann aber auch im Bereich einer am Achsträger vorgesehenen Aufnahme für ein Motorlager oder an anderen Abschnitten des Schubfelds, so insbesondere an einer Anbindungsstelle für ein weiteres Bauelement, vorgesehen sein. Damit ist also auf einem oder mehreren bestimmten Abschnitt(en) des Schubfelds bzw. eines dieses bildenden großflächigen und sich über den gesamten Flächenbereich des Schubfelds erstreckenden Blechteils ein Zusatzblech aufgebracht, welches in seinem Randbereich mit dem jeweiligen besagten Abschnitt bzw. dem soeben genannten großflächigen Blechteil, welches den gesamten Flächenbereich des Schubfelds bildet, verschweißt ist. Quasi innerhalb dieser bezüglich des Zusatzbleches umlaufenden Schweißverbindung kann das Zusatzblech von dem besagten großflächigen Blechteil abgesehen von ggf. vorgesehenen Stützsicken oder dgl. geringfügig beabstandet sein.

Ein hier vorgeschlagener partieller bzw. abschnittsweiser mehrschaliger Aufbau durch Vorsehen eines Zusatzbleches kann vorzugsweise an

Anbindungsstellen (bspw. zum Schweller, aber auch zu einem Motorlager oder zu weiteren Verschraubungspunkten bspw. auch des Schubfelds selbst) vorgesehen sein. Hierdurch ist eine gegenüber einem nur aus einem einzigen Blechteil oder einer Verbindung mehrerer separater Profile bestehenden Schubfeld gesteigerte Steifigkeit erzielbar. Vorzugsweise wird eine solche Mehr- oder Zweischaligkeit nur dort vorgesehen, wo erhöhte Anforderungen an die Steifigkeit des Schubfelds bestehen. Dies resultiert in einer Gewichtsoptimierung gegenüber einem vollflächig steifer gestalteten Schubfeld. Eine gleichwertige Steifigkeit könnte nämlich an einem einschaligen Blech nur durch eine Wandstärkenerhöhung erreicht werden, was mit einer massiven Gewichtserhöhung verbunden wäre. Die vorgeschlagene Mehrschaligkeit resultiert darüber hinaus in einer gesteigerten Bauraumausnutzung da man nicht an die begrenzte Umformbarkeit einer einschaligen Lösung bzw. Verwendung von mehreren Zusatzprofilen im Falle einer sog. Strebenlösung gebunden ist.

Es kann sich das Schubfeld bzw. eine erfindungsgemäße Versteifungsstruktur eines zweispurigen Fahrzeugs bis in den in Fahrtrichtung betrachtet vordersten Bereich des Achsträgers bzw. genannten Hilfsrahmens erstrecken und somit im Bereich der Fahrzeug-Vorderachse die Funktion der Abdeckung eines Lenkgetriebes mit übernehmen, womit kein weiteres entsprechendes separates Montageteil benötigt wird. Dies reduziert den Montageaufwand und die Teileanzahl. Gleichzeitig wird hiermit ein Schutz vor Schäden am Lenkgetriebe im Falle eines Aufsetzens des Fahrzeugs dargestellt. Im Übrigen kann mit einer solchen über einen weiten Bereich quasi durchgehenden Struktur auch ein verbessertes aerodynamisches Verhalten des Fahrzeugs erreicht werden.

Zur zusätzlichen Versteifung des Fahrzeugvorderbaus kann das Schubfeld weiterhin direkt oder über ein (neben dem Achsträger weiteres) Zwischenelement indirekt am Längsträger abgestützt bzw. befestigt sein. Ferner kann ein erfindungsgemäßes Schubfeld besonders einfach dafür ausgelegt sein, zumindest anteilig das Gewicht einer größeren elektrische Spule zu tragen, über welche eine im Fahrzeug vorgesehene elektrische Batterie induktiv beladen werden kann. Demgemäß kann eine erfindungsgemäße Versteifungsstruktur eine Aufnahme für eine (solche) elektrische Spule aufweisen.

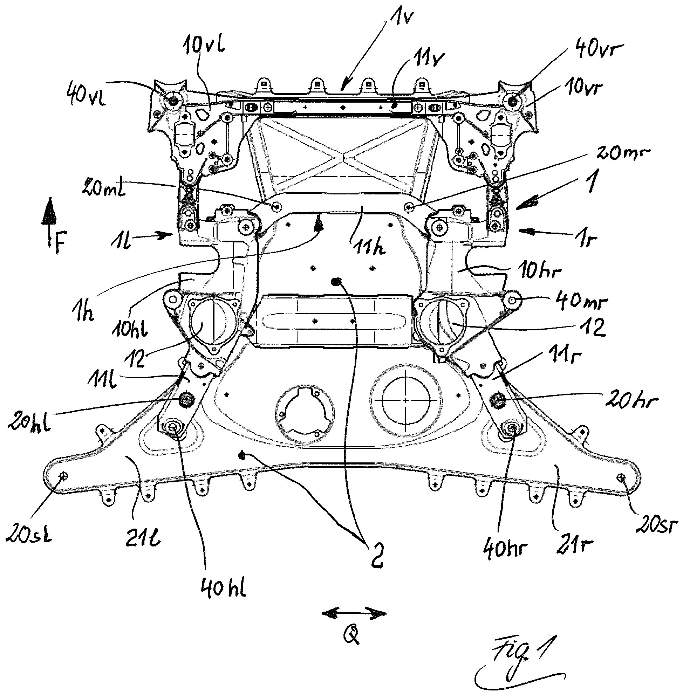

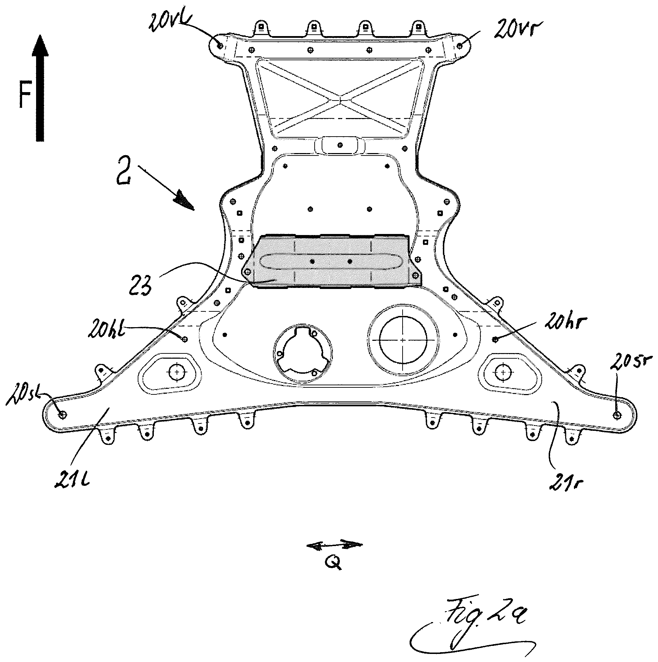

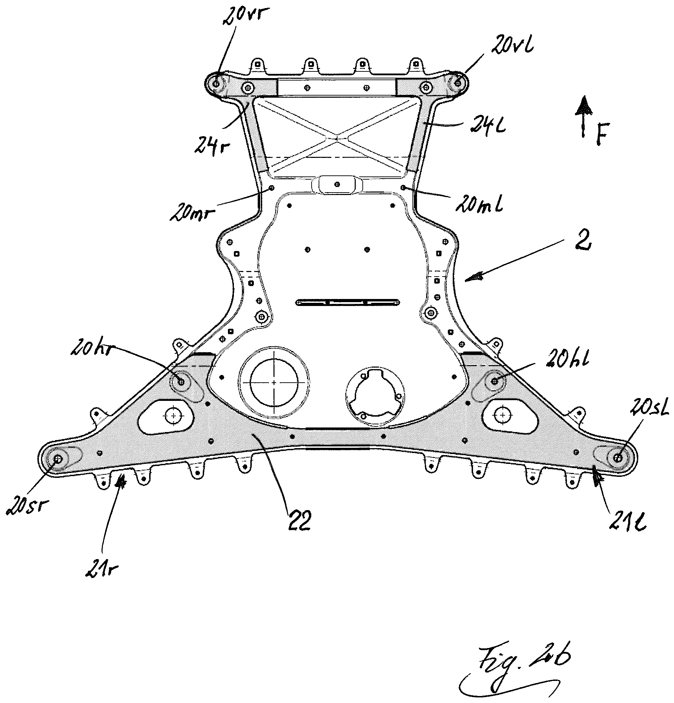

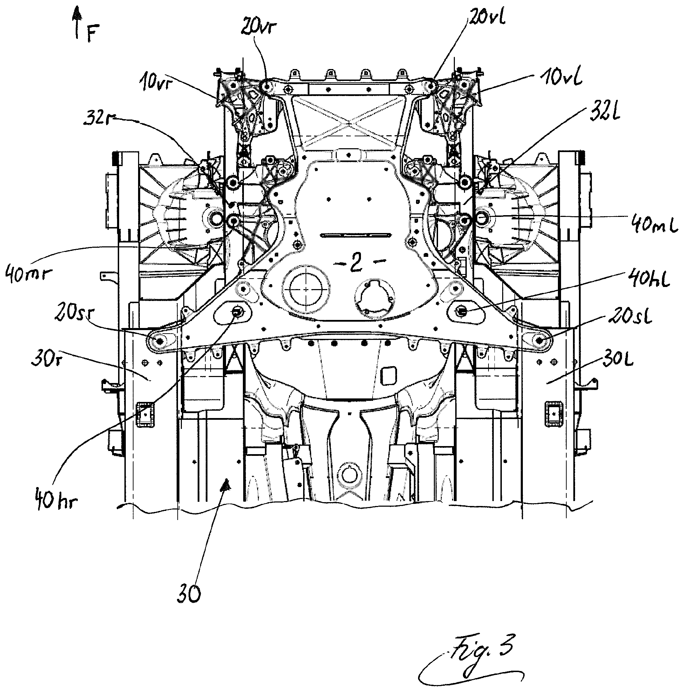

Die beigefügten Figuren zeigen ein Ausführungsbeispiel, wobei **Figur 1** eine Aufsicht von oben (senkrecht zur Fahrbahn hin gerichtet) auf einen Vorder-Achsträger (Hilfsrahmen) eines zweispurigen Fahrzeugs mit unterhalb dessen angeordnetem Schubfeld (= erfindungsgemäße Versteifungsstruktur) zeigt, welches (Schubfeld) bzw. welche (Versteifungsstruktur) in **Figur 2a** alleine, d.h. ohne Achsträger in gleicher Ansicht und in **Figur 2b** alleine in Ansicht von unten, d.h. von der Fahrbahn aus nach oben gerichtet, dargestellt ist. **Figur 3** zeigt ebenfalls in Ansicht von unten dieses Schubfeld einschließlich des Achsträgers im am Fahrzeug montierten Zustand und somit auch einen Teil des Fahrzeug-Unterbodens. Die Ausrichtung des Schubfelds zum Fahrzeug ergibt sich dabei aus dem die Fahrtrichtung des Fahrzeugs darstellenden Pfeil F, und erfindungswesentlich können sämtliche näher beschriebenen Merkmale sein.

Zunächst insbesondere auf **Fig.1** Bezug nehmend ist mit der Bezugsziffer 1 in seiner Gesamtheit ein als Achsträger im Bereich der Vorderachse eines Personenkraftwagens fungierender Hilfsrahmen gekennzeichnet, der im wesentlichen aus einem (in Fahrtrichtung F betrachtet) vorderen funktionalen Rahmen-Querträger 1v, einem hinteren funktionalen Rahmen-Querträger 1h sowie einem linken und einem rechten funktionalen Rahmen-Längsträger 1l, 1r besteht, wobei der Begriff des "funktionalen Trägers" verdeutlichen soll, dass es sich hierbei nicht um jeweils ein reales einziges Bauteil handelt, sondern dass reale Bauteile bzw. Strukturen vorhanden sind, welche im Zusammenwirken miteinander diese funktionalen Träger bilden. So sind in den beiden vorderen Eckbereichen dieses Hilfsrahmens 1 als Gußknoten ausgeführte Eckstrukturen 10vl ("vorne links"), 10vr ("vorne rechts") vorhanden, welche sich auch ein gewisses Maß in Richtung der einzelnen funktionalen Träger erstrecken und die über eine vordere Strebenstruktur 11v miteinander verbunden sind. Zwei hintere Gußknoten 10hl ("hinten links"), 10hr ("hinten rechts") nehmen einerseits eine hintere Strebenstruktur 11h und ferner eine rechte oder linke Strebenstruktur 11r bzw. 11l wie in Fig.1 dargestellt auf. Der hintere Rahmenquerträger 1h ist damit wie ersichtlich annähernd V-förmig gestaltet, während der vordere Rahmenquerträger 1v im wesentlich linear ausgebildet ist und die beiden seitlichen Rahmen-Längsträger 1l, 1r im wesentlichen durch eine Verbindung der Eckstrukturen 10vr und 10hr bzw. 10vl und 10hl zusammen mit der jeweiligen Strebstruktur 11r bzw. 11l gebildet sind. In jeder hinteren Eckstruktur 10hl bzw. 10hr ist weiterhin eine Aufnahme 12 für ein Motorlager, auf welchem das Antriebsaggregat des Fahrzeugs gelagert wird, vorgesehen, jedoch spielt die detaillierte Ausgestaltung des Achsträgers 1 für die vorliegende Erfindung lediglich eine untergeordnete Rolle.

Im am Fahrzeug eingebauten Zustand versteift ist dieser Hilfsrahmen oder Achsträger 1 durch ein Schubfeld 2, welches als ein im wesentlichen flächiges Blechformstück (aus geeignetem Stahlblech) ausgeführt ist und welches beim vorliegenden Ausführungsbeispiel an sechs Stellen über Schraubverbindungen von unten her am Hilfsrahmen 1 befestigt ist. Nur in **Fig.3** sichtbar sind zwei vordere Befestigungsstellen 20vl, 20vr an den vorderen Eckstrukturen 10vl, 10vr, während gegen Fahrtrichtung F nach hinten gehend gemäß **Fig.1** linksseitig und rechtsseitig jeweils eine mittlere Befestigungsstelle 20ml bzw. 20mr an der hinteren Strebenstruktur 11h und demgegenüber noch weiter hinten hintere Befestigungsstellen 20hl bzw. 20 hr an der linken bzw. rechten Strebenstruktur 11l bzw. 11r des hinteren funktionalen Rahmen-Querträgers 1h vorgesehen sind.

Wie ersichtlich erstreckt sich das Schubfeld 2 gegen Fahrtrichtung F betrachtet über die beiden hinteren Befestigungsstellen 20hl bzw. 20hr noch ein gewisses Maß nach hinten und insbesondere gegenüber diesen Befestigungsstellen in Fzg.-Querrichtung Q nach außen, so dass im Schubfeld 2 quasi von den hinteren Befestigungsstellen 20hl bzw. 20hr im wesentlichen nach seitlich außen abgehend jeweils ein Stützarm 21l bzw. 21r ausgeformt ist, welcher sich bis zum jeweiligen seitlichen Schweller 31l bzw. 31r des in **Fig.3** gezeigten Unterbodens 30 des Fahrzeug-Aufbaus erstreckt. An diesen Schwellern 30l, 30r ist das Schubfeld 2 linksseitig sowie rechtsseitig des Fahrzeugs jeweils mit einer weiteren Befestigungsstelle 20sl, 20sr über Schraubverbindungen befestigt.

**Figur 3** zeigt weiterhin einen linksseitig und rechtsseitig der Fzg.-Mitte am bzw. im Unterboden 30 im wesentlichen in Fahrtrichtung F verlaufenden Längsträger 32l bzw. 32r, welche Längsträger 32l, 32r auch als Karosserie-Längsträger oder als Motor-Längsträger bezeichnet werden können. In Befestigungsstellen 40hl bzw. 40hr (vgl. auch **Fig.1**) sind die Strebenstrukturen 11l bzw. 11r des Achsträgers 1 mit ihren freien Endabschnitten am jeweiligen Längsträger 32l, 32r lösbar befestigt und weiterhin ist jede Eckstruktur 10hl, 10hr, 10vl, 10vr in Befestigungsstellen 40ml, 40mr, 40vl, 40vr über Schraubverbindungen lösbar mit einem der Träger 32l bzw. 32r verbunden. Über diese genannten Befestigungsstellen ist somit der Achsträger 1 oder Hilfsrahmen 1 am Fahrzeug, genauer an dessen Längsträgern 32l, 32r befestigt.

Die in der Beschreibungseinleitung genannte Zwei-oder Mehrschaligkeit einzelner Abschnitte des Schubfelds 2, d.h. dass einzelne Abschnitte des Schaubfelds 2 quasi aus einer Oberschale und einer Unterschale bestehen, indem auf das sich über den gesamten Flächenbereich des Schubfelds 2 erstreckende Blechteil abschnittsweise Zusatzbleche aufgebracht sind, geht am besten aus den im weiteren erläuterten Figuren 2a, 2b hervor, in denen die auf das (nicht eingefärbt dargestellte) großflächige Blechteil aufgebrachten Zusatzbleche dunkler, d.h. grau hinterlegt dargestellt sind.

Demnach ist das Schubfeld 2 ist bereichsweise oder abschnittsweise durch Zusatzbleche 22, 23, 24l, 24r versteift, welche vorzugsweise unter Bildung eines Zwischenraumes auf das Schubfeld 2 bzw. dessen sich über den gesamten Flächenbereich des Schubfelds 2 erstreckendes Blechteil aufgelegt und randseitig mit diesem insbesondere stoffschlüssig fest verbunden sind. In Richtung der Fahrzeug-Hochachse betrachtet ist somit im jeweiligen Bereich oder Abschnitt quasi ein durch eine Oberschale sowie eine Unterschale gebildetes Schalenprofil dargestellt. Eine solche Versteifung des Schubfeldes 2 ist vorliegend im Bereich jedes Stützarmes 21l, 21r vorgesehen, wo hier ein zusammenhängendes Zusatzblech 22, welches sich vom linken Stützarm 21l bis zum rechten Stützarm 21r erstreckend an der Unterseite des großflächigen und sich über den gesamten Flächenbereich des Schubfelds 2 erstreckenden Blechteils in der vorbeschriebenen Weise aufgebracht ist, wie aus **Fig.2b** hervorgeht.

In vergleichbarer Weise versteift ist das Schubfeld 2 zwischen den bereits genannten und am Achsträger 1 vorgesehenen Aufnahmen 12 für Motorlager mittels eines sich in Fzg.-Querrichtung Q erstreckenden Zusatzblechs 23, welches auf die Oberseite des großflächigen und sich über den gesamten Flächenbereich des Schubfelds 2 erstreckenden Blechteils in der vorbeschriebenen Weise aufgebracht ist, wie aus **Fig.2a** hervorgeht.. Weiterhin analog sind Zusatzbleche 24l, 24r in den vorderen Randbereichen des Schubfelds 2 in der Umgebung der dortigen Eckstrukturen 10vl, 10vr des Achsträgers 1, nun wiederrum an der Unterseite des großflächigen und sich über den gesamten Flächenbereich des Schubfelds 2 erstreckenden Blechteils in der vorbeschriebenen Weise aufgebracht, wie **Fig.2b** zeigt.

## Patentansprüche

1. Versteifungsstruktur eines zweispurigen Fahrzeugs in Form eines als Blechformstück ausgebildeten Schubfelds (2), welches an einem als Achsträger (1) fungierenden Hilfsrahmen (1) und weiterhin an seitlichen Schwellern (31l, 31r) des Fahrzeug-Aufbaus abgestützt ist, **dadurch gekennzeichnet, dass** das Schubfeld (2) über im Blechformstück ausgeformte Stützarme (21l, 21r) an den Schwellern (31l, 31r) abgestützt ist.

2. Versteifungsstruktur nach Anspruch 1, wobei der Stützarm (21l, 21r) und/oder ein anderer Abschnitt des Schubfelds (2) durch ein im wesentlich parallel zu diesem Abschnitt liegendes Zusatzblech (22) versteift ist, so dass in Richtung der Fahrzeug-Hochachse betrachtet in diesem Schubfeld-Abschnitt ein durch eine Oberschale sowie eine Unterschale gebildetes Schalenprofil vorliegt.

3. Versteifungsstruktur nach Anspruch 1 oder 2, wobei das Schubfeld (2) im Bereich zwischen am Achsträger (1) vorgesehenen Aufnahmen (12) für Motorlager oder allgemein an einer Anbindungsstelle eines weiteren Bauelements durch ein Zusatzblech (23) versteift ist, derart, dass in Richtung der Fahrzeug-Hochachse betrachtet ein durch eine Oberschale sowie eine Unterschale gebildetes Schalenprofil vorliegt.

4. Versteifungsstruktur nach einem der vorangegangenen Ansprüche, **dadurch gekennzeichnet, dass** das Schubfeld (2) direkt oder indirekt auch an Längsträgern (32l, 32r) des Fahrzeugs befestigt ist.

5. Versteifungsstruktur nach einem der vorangegangenen Ansprüche, **dadurch gekennzeichnet, dass** das Schubfeld (2) eine Aufnahme für eine elektrische Spule aufweist.

## Claims

1. A stiffening structure of a two-track vehicle in the form of a shear field (2) designed as a shaped sheet-metal piece, which shear field is supported on a sub-frame (1) acting as an axle support (1) and also on lateral sills (31l, 31r) of the vehicle body,
**characterised in that** the shear field (2) is supported on the sills (31l, 31r) by means of supporting arms (21l, 21r) formed in the shaped sheet-metal piece.

2. A stiffening structure according to claim 1, wherein the supporting arm (21l, 21r) and/or another portion of the shear field (2) is stiffened by an auxiliary sheet (22) arranged substantially parallel to this portion, so that a shell profile formed by an upper shell and a lower shell as viewed in the direction of the vehicle vertical axis is provided.

3. A stiffening structure according to claim 1 or 2, wherein the shear field (2) is stiffened in the region between receptacles (12) provided on the axle support (1) for engine bearings or generally at an attachment point of a further component by an auxiliary sheet (23), in such a way that a shell profile formed by an upper shell and a lower shell as viewed in the direction of the vehicle vertical axis is provided.

4. A stiffening structure according to any one of the preceding claims,
**characterised in that** the shear field (2) is secured directly or indirectly also to side members (32l, 32r) of the vehicle.

5. A stiffening structure according to any one of the preceding claims,
**characterised in that** the shear field (2) has a receptacle for an electric coil.

## Revendications

1. Structure de renfort d'un véhicule à deux lignes de circulation sous la forme d'un bloc de poussée (2) constitué par une pièce moulée en tôle, qui s'appuie sur un châssis auxiliaire (1) constituant un support d'essieu (1) et en outre sur des bras oscillants latéraux (311, 31r) de la carrosserie du véhicule,
**caractérisée en ce que**
le bloc de poussée (2) s'appuie sur les bras oscillants (311, 31r) par l'intermédiaire de bras d'appui (21l, 21r) formés dans la pièce moulée en tôle.

2. Structure de renfort conforme à la revendication 1, dans laquelle le bras d'appui (211, 21r) et/ou un autre segment du bloc de poussée (2) est renforcé par une tôle supplémentaire (22) s'étendant essentiellement parallèlement à ce segment, de sorte que, considéré en direction de l'axe vertical du véhicule, dans ce segment du bloc de poussée il y ait un profil de coque formé par une coque supérieure et une coque inférieure.

3. Structure de renfort conforme à la revendication 1 ou 2, dans laquelle dans la zone située entre des logements de réception (12) de paliers du moteur situés sur le support d'essieu (1) ou de manière générale d'un emplacement de liaison d'un autre élément, le bloc de poussée (2) est renforcé par une tôle supplémentaire (23), de sorte que, considéré en direction de l'axe vertical du véhicule il y ait un profil en coque formé par une coque supérieure et une coque inférieure.

4. Structure de renfort conforme à une des revendications précédentes,
**caractérisée en ce que**
le bloc de poussée (2) est également fixé directement ou indirectement sur des logerons (321, 32r) du véhicule.

5. Structure de renfort conforme à l'une des revendications précédentes,
**caractérisée en ce que**
le bloc de poussée (2) comporte un logement de réception d'une bobine électrique.
